# EUROPEAN PATENT APPLICATION

(11) **EP 4 703 052 A1**
(43) Date of publication of application: **04.03.2026**
(21) Application number: 25164524.8
(22) Date of filing: 18.03.2025
(51) Int. Cl.: B06B 1/02, B01D 43/00

(54) **ULTRASONIC-BASED MATERIAL PROCESSING APPARATUS AND CONTROL METHOD THEREOF**

(30) Priority: 30.08.2024 KR 20240118018; 20.11.2024 KR 20240166221
(71) Applicant: Fust Lab. Co., Ltd., Yuseong-gu Daejeon 34015 (KR)
(72) Inventor: HWANGBO, Minsung, 34015 Daejeon (KR)
(74) Representative: Stöckeler, Ferdinand

(57) **Abstract**

An ultrasonic-based material processing apparatus includes an ultrasonic transfer unit configured to accommodate a processing target material, an ultrasonic generation unit disposed on a lateral surface of the ultrasonic transfer unit and including a piezoelectric element configured to generate ultrasonic waves, a power supply unit configured to output driving power to the ultrasonic generation unit, and a controller. The controller controls the power supply unit to supply test power to the ultrasonic generation unit, determines the resonant frequency of the piezoelectric element based on the output of the piezoelectric element as a response to the test power, determines a first driving frequency and a second driving frequency based on the resonant frequency, and controls the power supply unit to apply first driving power having the first driving frequency and second driving power having the second driving frequency to the ultrasonic generation unit.

## Description

### [Technical Field]

The present disclosure relates to an ultrasonic-based material processing apparatus and a method of controlling the same and, more particularly, to an ultrasonic-based material processing apparatus, which enables efficient processing by controlling the frequency of a piezoelectric element that generates ultrasonic waves, and a method of controlling the same.

### [Background Art]

A focusing material processing apparatus is an apparatus that transfers energy to an object by focusing ultrasonic waves generated by a piezoelectric element. The focusing material processing apparatus is used as a material processing apparatus that processes a material because the focusing material processing apparatus transfers energy in a non-invasive and non-destructive manner.

For example, the focusing material processing apparatus is used as a dispersion apparatus. With the development of the nano technology, powder having a nano size is manufactured in a solution form and used in several fields. However, it is necessary to properly disperse nano particles because such powder (e.g., a nano particle) having such a nano size tends to be agglomerated together. To this end, the focusing material processing apparatus is used.

Furthermore, the focusing material processing apparatus is used to decompose compounds. When specific energy is applied to a compound, the compound is decomposed because the molecular structure of the compound is deformed. In particular, the focusing material processing apparatus may also be used in the water processing field because a harmful material can be efficiently decomposed through the focusing material processing apparatus.

Such a focusing material processing apparatus may efficiently produce a great output compared to an input by deriving the resonance of a piezoelectric element. It is important to maintain a resonance condition for the piezoelectric element.

The contents described in the Background Art are to help the understanding of the background of the disclosure, and may include contents that are not a disclosed conventional technology.

### [Prior Art Document]

### [Patent Document]

Korean Patent Application Publication No. 10-2022-0141516 (entitled "Resonance Frequency Instrumentation of Ultrasonic Piezoelectric Devices")
Korean Patent Application Publication No. 10-2023-0103232 (entitled "Piezoelectric ultrasonic vibrator resonant frequency automatic detection device")

### [Summary of Invention]

### [Technical Problem]

An object of the present disclosure is to provide an ultrasonic-based material processing apparatus, which enables a stable operation of a piezoelectric element that generates ultrasonic waves because the apparatus can monitor the resonant frequency of the piezoelectric element, and a method of controlling the same.

### [Solution to Problem]

An ultrasonic-based material processing apparatus according to an embodiment of the present disclosure includes an ultrasonic transfer unit configured to accommodate a processing target material, an ultrasonic generation unit disposed on a lateral surface of the ultrasonic transfer unit and including a piezoelectric element configured to generate ultrasonic waves, a power supply unit configured to output driving power to the ultrasonic generation unit, and a controller. The controller controls the power supply unit so that test power is supplied from the power supply unit to the ultrasonic generation unit, may determine a resonant frequency of the piezoelectric element based on an output of the piezoelectric element as a response to the test power, may determine a first driving frequency and a second driving frequency based on the resonant frequency, and controls the power supply unit so that first driving power having the first driving frequency and second driving power having the second driving frequency are applied from the power supply unit to the ultrasonic generation unit.

The controller may determine the first driving frequency and the second driving frequency, based on the resonant frequency and offset information that is determined based on the processing target material. In this case, the controller may determine the first driving frequency by adding a first value that is determined based on the offset information to the resonant frequency, and may determine the second driving frequency by subtracting a second value that is determined based on the offset information from the resonant frequency.

The power supply unit may generate synthetic driving power by synthesizing the first driving power and the second driving power, and may output the generated synthetic driving power to the ultrasonic generation unit.

The controller may determine a driving frequency band having a predetermined range including the resonant frequency based on the offset information, and may determine the first driving frequency and the second driving frequency, among frequencies belonging to the driving frequency band.

The first driving frequency may be frequency higher than the resonant frequency, and the second driving frequency may be a frequency lower than the resonant frequency.

The ultrasonic-based material processing apparatus may further include an input unit configured to receive information of the processing target material. The controller may set offset information based on the information of the processing target material, which is input through the input unit.

The controller may determine a resonant phase that is a phase in the resonant frequency of the piezoelectric element, may determine a driving phase based on the resonant phase, and may control the power supply unit so that the driving power corresponding to the resonant frequency and the driving phase is supplied from the power supply unit to the ultrasonic generation unit. In this case, the driving phase may be a phase delayed with respect to the resonant phase. The controller may determine the driving phase, based on the resonant frequency and offset information that is determined depending on the processing target material.

A control method of an ultrasonic-based material processing apparatus according to an embodiment of the present disclosure includes controlling a power supply unit so that test power is supplied from the power supply unit to an ultrasonic generation unit disposed on a lateral surface of an ultrasonic transfer unit, determining a resonant frequency of the ultrasonic generation unit based on an output of a piezoelectric element as a response to the test power, determining a first driving frequency and a second driving frequency based on the resonant frequency, and controlling the power supply unit so that first driving power having the first driving frequency and second driving power having the second driving frequency are applied from the power supply unit to the ultrasonic generation unit.

The control method may further comprise determining the first driving frequency and the second driving frequency, based on the resonant frequency and information of the processing target material.

The control method may further comprise determining the first driving frequency and the second driving frequency, based on the resonant frequency and offset information that is determined based on the processing target material.

The control method may further comprise generating synthetic driving power by synthesizing the first driving power and the second driving power and outputs the generated synthetic driving power to the ultrasonic generation unit.

### [Advantageous Effects of Invention]

The piezoelectric element constructed as above according to an embodiment of the present disclosure has an effect in that the piezoelectric element can operate in a frequency similar to an actual resonant frequency although a slight error occurs in determining the resonant frequency of the piezoelectric element because the piezoelectric element operates based on two or more driving frequencies not one driving frequency.

The processing of a material in an embodiment of the present disclosure can be smoothly performed because a frequency band having a predetermined bandwidth is set on the basis of a determined resonant frequency and driving power based on a plurality of frequencies within the frequency band can be transmitted to the piezoelectric element.

Furthermore, vibration that enters the inside of the ultrasonic transfer unit can be adjusted based on a change (e.g., a particle size, viscosity, a concentration, or a slight temperature) of a sample (i.e., a processing target material) within the ultrasonic transfer unit because the bandwidth of the frequency band can be varied based on the attributes of the sample. Accordingly, it is possible to transfer the most efficient energy (i.e., ultrasonic energy) to the inside of the ultrasonic transfer unit.

A driving signal (or driving power) having a phase that has been slightly lagged from the phase of a determined resonant frequency can be transferred to the piezoelectric element. Even in this case, it is possible to transfer the most efficient energy (i.e., the ultrasonic energy) to the inside of the ultrasonic transfer unit.

### [Brief Description of Drawings]

FIG. 1 illustrates a material processing apparatus according to embodiments of the present disclosure.
FIG. 2 illustrates the structure of an ultrasonic transfer unit and an ultrasonic generation unit illustrated in FIG. 1.
FIG. 3 is a diagram for describing a control method of the material processing apparatus according to embodiments of the present disclosure.
FIG. 4 is a diagram for describing an example of an operation of the material processing apparatus according to embodiments of the present disclosure.
FIG. 5 is a diagram for describing another example of an operation of the material processing apparatus according to embodiments of the present disclosure.
FIG. 6 is a diagram for describing still another example of an operation of the material processing apparatus according to embodiments of the present disclosure.

### [Description of Embodiments]

Hereinafter, embodiments of the present disclosure are described in detail with reference to the accompanying drawings.

Embodiments are provided to more fully explain the present disclosure to a person having ordinary knowledge in the art to which the present disclosure pertains. The following embodiments may be modified in various other forms, and the scope of the present disclosure is not limited to the following embodiments. Rather, these embodiments are provided to make the present disclosure more thorough and complete and to fully convey the spirit of the present disclosure.

Terms used in this specification are used to describe a specific embodiment, and are not intended to limit the present disclosure. Furthermore, in this specification, an expression of the singular number may include an expression of the plural number unless clearly defined otherwise in the context. In the present application, it is to be understood that a term, such as "include" or "have", is intended to designate that a characteristic, a number, a step, an operation, a component, a part or a combination of them described in the specification is present, and does not exclude the presence or addition possibility of one or more other characteristics, numbers, steps, operations, components, parts, or combinations of them in advance.

The drawings are merely for enabling the spirit of the present disclosure to be understood, and it should not be interpreted that the scope of the present disclosure is limited by the drawings. Furthermore, in the drawings, a relative thickness or length or a relative size may be enlarged for convenience and the clarity of description.

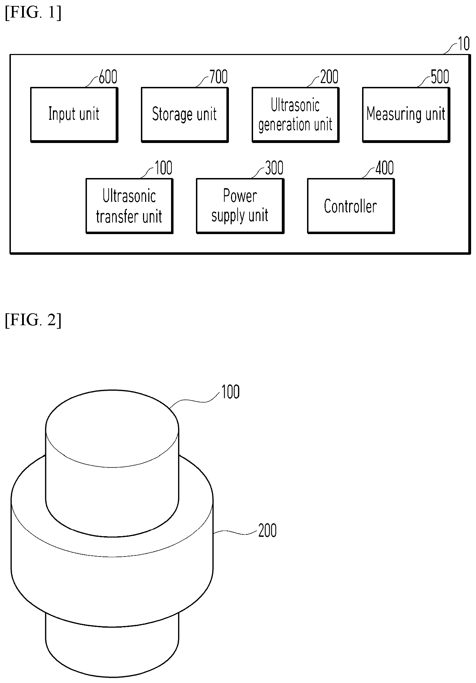

FIG. 1 illustrates a material processing apparatus according to embodiments of the present disclosure. Referring to FIG. 1, the material processing apparatus 10 may include an ultrasonic transfer unit 100, an ultrasonic generation unit 200, a power supply unit 300, and a controller 400.

A processing target material is introduced and accommodated in the ultrasonic transfer unit 100. Furthermore, in the ultrasonic transfer unit 100, ultrasonic processing (e.g., dispersion or water processing by the cavitation of ultrasonic waves) is performed on a processing target material. The processing target material on which the ultrasonic processing has been completed may be discharged from the ultrasonic transfer unit 100. According to embodiments, the ultrasonic transfer unit 100 may have a structure that facilitates the ultrasonic processing of the processing target material. For example, the ultrasonic transfer unit 100 may be a manifold in which the processing target material is processed.

The ultrasonic generation unit 200 may generate ultrasonic waves. According to embodiments, the ultrasonic generation unit 200 may include a piezoelectric element. The piezoelectric element may be a PZT element (PbZrxTi(1-x)O3-series element), for example, but the present disclosure is not limited thereto.

The ultrasonic generation unit 200 may generate ultrasonic waves by generating vibration by using power supplied from the outside. For example, the ultrasonic generation unit 200 may receive driving power having a predetermined operating frequency, and may generate ultrasonic waves having a predetermined frequency in response to the driving power.

The power supply unit 300 may generate power that is used in the material processing apparatus 10. According to embodiments, the power supply unit 300 may include a driving power unit (not illustrated) that generates driving power (e.g., AC power) for driving the ultrasonic generation unit 200. In this case, the driving power unit may generate driving power having frequencies of various regions.

The controller 400 may control an overall operation of the material processing apparatus 10. According to embodiments, the controller 400 includes a processor having the computational processing ability, and may control various operations of the material processing apparatus 10 under the control of the processor. The processor may include all types of devices capable of processing data. In this case, the processor may refer to a data processing apparatus that includes a circuit that has been physically structured to perform a function expressed as a code or an instruction included in a program, for example, and that is embedded in hardware. As described above, the processor may be implemented with one or more general-purpose computers or a special-purpose computer, like a controller, an arithmetic logic unit (ALU), a digital signal processor, a microcomputer, a field programmable gate array (FPGA), a programmable logic unit (PLU), a microprocessor, or other apparatuses capable of responding to an instruction and executing an instruction in a defined way, for example, but the scope of the present disclosure is not limited thereto.

According to embodiments, the controller 400 may control the power supply unit 300 in order to generate the driving power for driving the ultrasonic generation unit 200. For example, the controller 400 may control the frequency of the driving power generated by the power supply unit 300 and the phase of the ultrasonic generation unit 200 (more specifically, the piezoelectric element). For example, the power supply unit 300 may generate the driving power corresponding to a frequency indicated by the controller 400.

According to embodiments of the present disclosure, the controller 400 may monitor the state of the ultrasonic generation unit 200, and may determine driving power of the ultrasonic generation unit 200, that is, the frequency of the driving power, based on the results of the monitoring.

In particular, the controller 400 may determine driving power for efficiently driving the ultrasonic generation unit 200 by considering information (e.g., attributes) of a processing target material, which is processed by the material processing apparatus 10. Accordingly, there is an effect in that the ultrasonic generation unit 200 can stably operate although the operating environment of the material processing apparatus 10 is changed in real time.

In order for the piezoelectric element of the ultrasonic generation unit 200 to efficiently generate ultrasonic waves, driving power corresponding to the resonant frequency of a corresponding piezoelectric element needs to be applied. Otherwise, input-to-output efficiency of the piezoelectric element decreases, leading to degraded driving conditions, which may result in damage or excessive heat generation.

The resonant frequency of the piezoelectric element may be previously aware, but is a frequency in a specific condition (e.g., a laboratory condition). When the piezoelectric element actually starts to operate, an actual resonant frequency may vary depending on a surrounding temperature, pressure, or a method of disposing the piezoelectric element.

Accordingly, embodiments of the present disclosure has an effect in that stable ultrasonic waves can be generated by determining a resonant frequency in a real-time operating environment of the piezoelectric element and applying driving power corresponding to the determined resonant frequency.

According to embodiments, the material processing apparatus 10 further includes a measuring unit 500, and monitors the ultrasonic generation unit 200, that is, the current state of the piezoelectric element through the measuring unit 500. The controller 400 may determine the resonant frequency of the piezoelectric element based on the results of the measurement of the measuring unit 500.

The measuring unit 500 may measure the state or output of the ultrasonic generation unit 200. According to embodiments, the measuring unit 500 may measure at least one of the output (amplitude), impedance, and phase of the ultrasonic generation unit 200. The measuring unit 500 may provide the results of the measurement to the controller 400.

As ultrasonic processing is performed on a processing target material, a change (e.g., a particle size, viscosity, a concentration, or a slight temperature) in a sample (i.e., a processing target material) occurs in the ultrasonic transfer unit 100. When the piezoelectric element is vibrated in a specific frequency, a change within the sample (i.e., the processing target material) cannot be ignored, as not only does the piezoelectric element vibrate, but the vibrations are also transferred to the sample. This is because adjusting vibrations entering from the outside to match the internal changes (i.e., vibrations entering the ultrasonic transfer unit 100) results in the most efficient energy transfer and is the most effective for the sample.

Accordingly, it is also important to search for the resonant frequency of the piezoelectric element. However, not a resonant frequency in which only the characteristics of the piezoelectric element are considered, but an optimal resonant frequency in which a series of environments (e.g., a sample and a tube form) around the piezoelectric element have been considered is necessary for the processing of a sample.

That is, an embodiment of the present disclosure is for efficiently transferring energy (e.g., ultrasonic energy) to the inside of the ultrasonic transfer unit 100 rather than being simply focused on a driving condition for the piezoelectric element. In this case, the term "efficient" may be understood as considering the changes in the sample inside the ultrasonic transfer unit 100.

Accordingly, according to embodiments, the material processing apparatus 10 may further include an input unit 600 and a storage unit 700. According to an embodiment, the storage unit 700 is constructed to be included in the controller 400, but the present disclosure is not limited thereto.

According to an embodiment of the present disclosure, the input unit 600 may receive information of a processing target material. Furthermore, the input unit 600 may receive offset information corresponding to information of the processing target material.

In this case, the processing target material is a target material, that is, a target to be processed (e.g., an ultrasonic processing target), and may refer to a material that is introduced into the ultrasonic transfer unit 100.

The information of the processing target material may include the name and inflow quantity of the processing target material and the attributes (e.g., a particle size, viscosity, a concentration, or a temperature) of the processing target material (or a sample), which are changed as ultrasonic processing is performed.

The offset information may be information that is used to determine the frequency and phase of driving power, which are subsequently described. The offset information may include frequency offset information and phase offset information. According to embodiments, the offset information may be used to determine a driving frequency.

For example, a frequency that is obtained by adding a frequency offset (e.g., K1) to the resonant frequency of the piezoelectric element or subtracting the frequency offset from the resonant frequency of the piezoelectric element may be determined as a driving frequency. In this case, the frequency offset (e.g., K1) may be a frequency value (e.g., 3 kHz or 5 kHz) that is determined based on information of a processing target material.

Alternatively, a driving frequency may be determined in a driving frequency band having a predetermined range, which is obtained by adding a predetermined frequency offset to the resonant frequency of the piezoelectric element. The driving frequency band may vary depending on information of a processing target material. For example, a driving frequency band having a range of ±5% may be determined on the basis of a resonant frequency in accordance with information of a processing target material A. A driving frequency band having a range of ±10% may be determined on the basis of a resonant frequency in accordance with information of a processing target material B. In the examples, the range values of ±5% and ±10% of the resonant frequency may each be the frequency offset.

According to embodiments, a phase that is obtained by adding a phase offset (e.g., K2) to a resonant phase, that is, a phase in the resonant frequency of the piezoelectric element, may be determined as the driving phase of the piezoelectric element. That is, the resonant phase may be said to be the phase of driving power that is transferred to the piezoelectric element. Furthermore, the driving phase may be said to be a phase that is slightly changed (e.g., delayed) from the resonant phase of the piezoelectric element. Furthermore, the phase offset (e.g., K2) may be a phase value that is determined based on information of a processing target material.

The information of the processing target material and the offset information corresponding to the information of the processing target material may be directly input by a user through a terminal (not illustrated).

If necessary, the input unit 600 may receive only information of a processing target material, and may previously store offset information corresponding to information on each of multiple materials in the storage unit 700. In this case, offset information corresponding to information of each material may be previously stored in the storage unit 700 based on results obtained through many experiments. In this case, the term "each material" may refer to a material that is introduced into the ultrasonic transfer unit 100 and that may become an ultrasonic processing target. If anyone material, among multiple materials, before the material is introduced into the ultrasonic transfer unit 100 is introduced into the ultrasonic transfer unit 100, the corresponding material may be said to be a processing target material.

The storage unit 700 may store data that are necessary for an operation of the controller 400.

The storage unit 700 stores offset information (e.g., frequency offset information or phase offset information) corresponding to information on each of multiple materials. Accordingly, the controller 400 may read offset information (e.g., frequency offset information/phase offset information) corresponding to information of a processing target material from the storage unit 700, and may determine a driving frequency/driving phase by applying the offset information to a resonant frequency/resonant phase based on the read offset information. For example, the controller 400 may determine, as a driving frequency, a frequency that is obtained by adding a frequency offset value corresponding to frequency offset information to a resonant frequency.

The storage unit 700 may store a program consisting of instructions for performing a series of operations that are performed by the controller 400. The storage unit 700 may include a nonvolatile memory device or a volatile memory device.

FIG. 2 illustrates the structure of the ultrasonic transfer unit 100 and the ultrasonic generation unit 200 illustrated in FIG. 1.

The ultrasonic transfer unit 100 may have a cylindrical tubular shape. A material may flow through the ultrasonic transfer unit 100 having the tubular shape. For example, the ultrasonic transfer unit 100 may include an inlet (not illustrated) into which a processing target material (e.g., a dispersion medium) is introduced and an outlet (not illustrated) from which the processing target material is discharged. The inlet and the outlet may communicate with each other by an internal space of the ultrasonic transfer unit 100. Although not illustrated, for example, a pump (not illustrated) may be provided on a path connected to the outlet. A flow from the inlet to the direction of the outlet may be formed by a force that is provided from the pump.

Furthermore, the ultrasonic generation unit 200 has a cylindrical shape, and may be constructed to include a hollow therein and to surround the ultrasonic transfer unit 100. That is, the ultrasonic generation unit 200 is installed on the lateral surface of the ultrasonic transfer unit 100, and may be installed to surround a part (e.g., a central part) of the ultrasonic transfer unit 100 on the lateral surface of the ultrasonic transfer unit 100.

The ultrasonic generation unit 200 has a focusing type, and may convert electric energy into ultrasonic energy and provide the ultrasonic energy to a processing target material that flows into the inside of the ultrasonic transfer unit 100.

The ultrasonic generation unit 200 having a circular cross section is installed at the central part of the lateral surface of the ultrasonic transfer unit 100, and surrounds the central part of the lateral surface of the ultrasonic transfer unit 100. Accordingly, ultrasonic waves that are generated by the ultrasonic generation unit 200 can be accurately focused on the ultrasonic transfer unit 100.

A hollow may be formed within the ultrasonic transfer unit 100. The outside diameter of the hollow in a region in which the ultrasonic generation unit 200 is placed may be greater than the outside diameter of the hollow in a region in which the ultrasonic generation unit 200 is not placed.

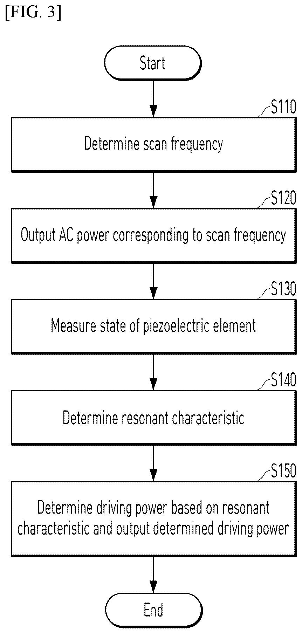

FIG. 3 is a diagram for describing a control method of the material processing apparatus according to embodiments of the present disclosure.

Referring to FIG. 3, the material processing apparatus 10 determines a scan frequency (S110). The scan frequency refers to the frequency of driving power (i.e., test power) that is applied to the piezoelectric element in order to check the state of the piezoelectric element. For example, the scan frequency may be a frequency having several hundreds of kHz bands. Preferably, the scan frequency may be 360 kHz to 400 kHz or less, but the present disclosure is not limited thereto. In this case, the scan frequency may be said to be a set of multiple differential frequencies. For example, the scan frequency may be said to be a set of frequencies each converted from 360 kHz in a 10 kHz unit. According to the example, frequencies of 360 kHz, 370 kHz, 380 kHz, 390 kHz, and 400 kHz may be said to be scan frequencies.

The material processing apparatus 10 supplies driving power corresponding to each scan frequency, that is, test power corresponding to each scan frequency, to the piezoelectric element of the ultrasonic generation unit 100 (S120). According to embodiments, the controller 400 may sequentially determine the scan frequencies, and may control the power supply unit 300 to output driving power corresponding to the determined scan frequencies. To supply the driving power (i.e., the test power) corresponding to the scan frequencies to the piezoelectric element may mean that, assuming the number of scan frequencies is three, for example, after a predetermined time since driving power corresponding to a first scan frequency is supplied to the piezoelectric element, driving power corresponding to a second scan frequency is supplied to the piezoelectric element, and after a predetermined time since the driving power corresponding to the second scan frequency is supplied to the piezoelectric element, driving power corresponding to a third scan frequency is supplied to the piezoelectric element.

The material processing apparatus 10 may measure the state of the piezoelectric element as the driving power (i.e., the test power) corresponding to the scan frequencies is applied to the piezoelectric element (S130). According to embodiments, the measuring unit 500 of the material processing apparatus 10 may measure at least one of the output (power) and impedance of the piezoelectric element and the phase of the piezoelectric element.

The material processing apparatus 10 may determine a resonant characteristic of the piezoelectric element based on the results of the measurement (S140). In this case, the resonant characteristic of the piezoelectric element may refer to a resonant frequency and/or a phase (resonant phase) in the resonant frequency. According to embodiments, the controller 400 of the material processing apparatus 10 may determine a frequency (e.g., a peak frequency) in which the output of the piezoelectric element is a maximum to have the resonant characteristic of the piezoelectric element based on the results of the measurement. For example, the material processing apparatus 10 may determine a frequency in which the output of the piezoelectric element is a maximum to have the resonant characteristic of the piezoelectric element in a range in which the phase of the piezoelectric element is 35 degrees or less.

Furthermore, according to embodiments, the controller 400 of the material processing apparatus 10 may determine a frequency in which impedance of the piezoelectric element is a minimum to have the resonant characteristic of the piezoelectric element based on the results of the measurement.

Furthermore, according to embodiments, the controller 400 of the material processing apparatus 10 may determine a frequency in which the phase (or the phase of a current and/or the phase of a voltage) of the piezoelectric element is a predetermined phase (e.g., the lowest phase) to have the resonant characteristic of the piezoelectric element based on the results of the measurement.

The material processing apparatus 10 may determine driving power (e.g., AC power) based on the determined resonant characteristic, and may supply the determined driving power to the piezoelectric element (S150). In this case, the meaning that the driving power is determined may mean that the driving frequency and/or driving phase of the driving power is determined.

According to embodiments of the present disclosure, the material processing apparatus 10 may determine the driving frequency that is different from the resonant frequency by a predetermined value. The number of driving frequencies may be one or more.

According to embodiments of the present disclosure, the material processing apparatus 10 may determine the driving phase that is different from the resonant phase by a predetermined value. The driving phase may be slower than the resonant phase.

The material processing apparatus 10 may determine the driving power by considering the characteristics (or attributes) of a processing target material along with the resonant characteristic. For example, the material processing apparatus 10 may receive information on the characteristics of a processing target material from the outside. The information may be previously stored, or the material processing apparatus 10 may receive the information from the output results of a characteristic analyzer that is separately connected thereto.

Accordingly, there is an effect in that more effective processing is possible because the characteristics of a processing target material can be considered rather than determining driving power in a lump because the driving power is determined by incorporating the attributes of the processing target material into a resonant characteristic. For example, the material processing apparatus 10 may determine a driving frequency that is different from a resonant frequency by a predetermined value, but the predetermined value may be variously determined depending on the characteristics of a processing target material.

The operation of determining the resonant characteristic, which has been described with reference to FIG. 3, may be manually started by a user or may be automatically started by the material processing apparatus 10.

For example, after determining the resonant characteristic of the piezoelectric element, the material processing apparatus 10 may monitor the driving frequency of the piezoelectric element periodically or in real time, and may perform an operation of determining the resonant characteristic of the piezoelectric element again when the output of the piezoelectric element is changed over a predetermined value.

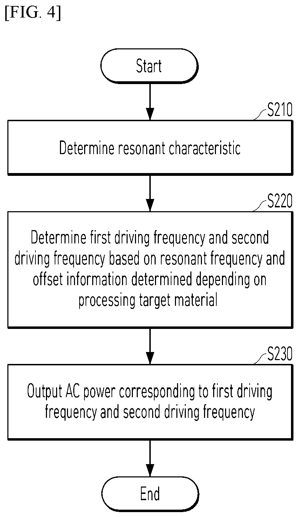

FIG. 4 is a diagram for describing an example of an operation of the material processing apparatus according to embodiments of the present disclosure.

Referring to FIG. 4, the material processing apparatus 10 may determine a resonant characteristic (e.g., the resonant frequency) of the piezoelectric element (S210). In this case, the determination of the resonant characteristic (e.g., the resonant frequency) may be performed by the operation described with reference to FIG. 3.

The material processing apparatus 10 receives information of a processing target material from a user terminal.

Thereafter, the material processing apparatus 10 determines a first driving frequency higher than the resonant frequency and a second driving frequency lower than the resonant frequency based on the determined resonant characteristic (e.g., the resonant frequency) (S220). In this case, in order to determine the first driving frequency and the second driving frequency, not only the resonant frequency, but offset information that is determined based on information of the processing target material is required. Accordingly, the controller 400 of the material processing apparatus 10 may read first frequency offset information (i.e., including a first value) corresponding to the information of the processing target material from the offset information stored in the storage unit 700, and may determine a frequency that is obtained by adding the read first value (e.g., a positive integer value) to the resonant frequency to be the first driving frequency. Furthermore, the controller 400 of the material processing apparatus 10 may read second frequency offset information (i.e., including a second value) corresponding to the information of the processing target material from the offset information stored in the storage unit 700, and may determine a frequency that is obtained by subtracting the read second value (e.g., a positive integer value) from the resonant frequency to be the second driving frequency. In this case, the first value and the second value may be different from each other or may be identical with each other.

The material processing apparatus 10 supplies the piezoelectric element with driving power corresponding to the first driving frequency and the second driving frequency (S230). For example, the material processing apparatus 10 may generate first driving power having the first driving frequency and second driving power having the second driving frequency, and may supply the piezoelectric element with the driving power based on the first driving power and the second driving power. In this case, the power supply unit 300 of the material processing apparatus 10 may generate synthetic driving power by synthesizing the first driving power and the second driving power, and may supply the generated synthetic driving power to the piezoelectric element of the ultrasonic generation unit 200.

That is, according to FIG. 4, the piezoelectric element may operate based on two or more driving frequencies not one driving frequency. Accordingly, there is an effect in that the piezoelectric element can operate in a frequency similar to an actual resonant frequency because two or more driving frequencies are used although a slight error occurs in determining the resonant frequency of the piezoelectric element.

It has been described with reference to FIG. 4 that the information of the processing target material is received from the user terminal. If a measuring apparatus capable of measuring the attributes of the processing target material can be separately included, if necessary, the first value and the second value may be determined on the basis of a resonant frequency based on the attributes of the processing target material, which are measured by using the separate measuring apparatus.

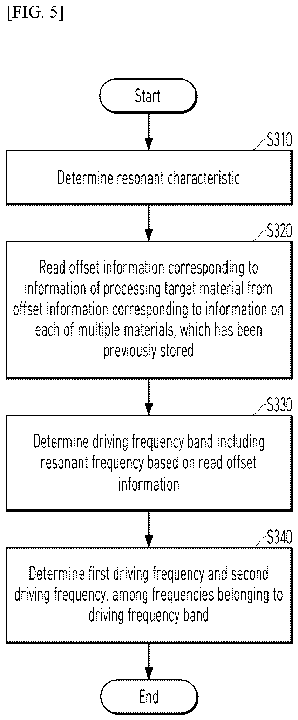

A case in which the frequency offsets of the first value and the second value have been directly applied to the resonant frequency of the piezoelectric element has been described with reference to FIG. 4. However, a driving frequency band may be applied instead of the first value and the second value. This is described with reference to FIG. 5.

FIG. 5 is a diagram for describing another example of an operation of the material processing apparatus according to embodiments of the present disclosure.

Referring to FIG. 5, the material processing apparatus 10 may determine a resonant characteristic (e.g., the resonant frequency) of the piezoelectric element (S310). In this case, the determination of the resonant characteristic (e.g., the resonant frequency) may be performed by the operation described with reference to FIG. 3.

The material processing apparatus 10 receives information of a processing target material from a user terminal (not illustrated).

Thereafter, the controller 400 of the material processing apparatus 10 reads frequency offset information corresponding to information of the processing target material from offset information corresponding to information on each of multiple materials, which is stored in the storage unit 700 (S320). In this case, the frequency offset information may include a driving frequency band having a predetermined range. For example, the driving frequency band having a predetermined range may include a frequency band having a range of ±3% or ±3 kHz on the basis of the resonant frequency.

Thereafter, the controller 400 of the material processing apparatus 10 determines a driving frequency band having a predetermined range on the basis of the resonant frequency based on the read offset information (S330). That is, the controller 400 may determine the driving frequency band including the resonant frequency, based on the read driving frequency band having the predetermined range. As a result, it may be understood that the determined driving frequency band varies depending on the information of the processing target material.

Thereafter, the controller 400 of the material processing apparatus 10 determines a first driving frequency and a second driving frequency, among frequencies belonging to the determined driving frequency band (S340). In this case, the first driving frequency is a frequency higher than the resonant frequency, and may be a frequency that is generated by adding a predetermined first value to the resonant frequency, for example. The second driving frequency is a frequency lower than the resonant frequency, and may be a frequency that is obtained by subtracting a predetermined second value from the resonant frequency, for example.

Thereafter, the material processing apparatus 10 may supply the piezoelectric element of the ultrasonic generation unit 200 with driving power based on the determined first driving frequency and second driving frequency.

According to FIG. 5, vibration that enters the inside of the ultrasonic transfer unit 100 can be adjusted based on a change in a sample (i.e., the processing target material) within the ultrasonic transfer unit 100 because a driving frequency band can be changed on the basis of a resonant frequency based on information of a processing target material. Accordingly, it is possible to transfer the most efficient energy (i.e., ultrasonic energy) to the inside of the ultrasonic transfer unit 100.

It has been described with reference to FIG. 5 that the information of the processing target material is received from the user terminal. However, if a measuring apparatus capable of measuring the attributes of a processing target material can be separately included, if necessary, a driving frequency band may be determined based on the attributes of the processing target material, which are measured by using the separate measuring apparatus.

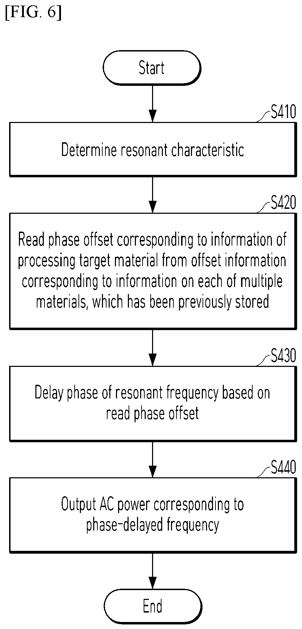

In FIGS. 4 and 5, frequency offset information corresponding to information (including the attributes) of a processing target material has been applied to the resonant frequency of the piezoelectric element when the resonant frequency of the piezoelectric element is determined. Phase offset information may be applied to the resonant frequency of the piezoelectric element instead of the frequency offset information. This is described with reference to FIG. 6.

FIG. 6 is a diagram for describing still another example of an operation of the material processing apparatus according to embodiments of the present disclosure.

Referring to FIG. 6, the material processing apparatus 10 may determine a resonant characteristic (e.g., a phase (or resonant phase) in the resonant frequency) of the piezoelectric element (S410). In this case, the determination of the resonant characteristic (e.g., the phase (or the resonant phase) in the resonant frequency) may be performed by the operation described with reference to FIG. 3.

The material processing apparatus 10 receives information of the processing target material from a user terminal (not illustrated).

Thereafter, the controller 400 of the material processing apparatus 10 reads phase offset information corresponding to the information of the processing target material from offset information corresponding to information on each of multiple materials, which is stored in the storage unit 700 (S420). In this case, the phase offset information may include a predetermined phase delay value. For example, the phase delay value is a delay value for a phase in a determined resonant frequency, and may mean information on a phase that is slightly lagged from the phase in the determined resonant frequency, for example. The phase delay value may be different depending on the information of the processing target material. For example, if an inflow quantity is K weight and a processing target material A having an attribute "d" is introduced, a phase delay value for the phase of a resonant frequency may be "a". If the inflow quantity is L (L > K) weight and the processing target material A having an attribute "e" is introduced, the phase delay value for the phase of the resonant frequency may be "b(b > a)". If the inflow quantity is K weight and a processing target material B having an attribute "f" is introduced, the phase delay value for the phase of the resonant frequency may be "c(c > b)".

Thereafter, the controller 400 of the material processing apparatus 10 delays the phase in the resonant frequency based on the read phase offset (S430). In this case, the phase in the resonant frequency may refer to the phase of the piezoelectric element when driving power corresponding to the resonant frequency is applied to the piezoelectric element. For example, the controller 400 of the material processing apparatus 10 may determine a resonant phase, that is, the phase in the resonant frequency of the piezoelectric element of the ultrasonic generation unit 200, and may determine a driving phase based on the resonant phase. That is, the phase of the driving power that is transferred to the piezoelectric element may be slightly delayed by determining the driving phase because the driving phase may be obtained by adding the phase offset to the resonant phase.

Thereafter, the controller 400 of the material processing apparatus 10 controls the power supply unit 300 to supply the driving power (i.e., driving power corresponding to the resonant frequency and the driving phase) of the delayed phase from the power supply unit 300 to the ultrasonic generation unit 200. Accordingly, the power supply unit 300 supplies the driving power (i.e., driving power corresponding to the resonant frequency and the driving phase) of the delayed phase to the piezoelectric element of the ultrasonic generation unit 200 (S440).

According to FIG. 6, the material processing apparatus 10 may change the phase of driving power that is transferred to the piezoelectric element based on information of a processing target material. The same effect as that in FIG. 5 can be obtained although the phase of the driving power is changed.

It has been described with reference to FIG. 6 that the information of the processing target material is received from the user terminal. If a measuring apparatus capable of measuring the attributes of a processing target material can be separately included, if necessary, phase offset information may be determined based on the attributes of the processing target material, which are measured by using the separate measuring apparatus.

It has been described with reference to FIGS. 5 and 6 that the controller 400 determines the frequency or phase of driving power by incorporating offset information of a processing target material into the frequency or phase of the driving power. According to embodiments, the controller 400 may determine the frequency or phase of driving power based on information of a processing target material in various ways instead of offset information. That is, the controller 400 according to embodiments of the present disclosure may use the information of the processing target material in determining the frequency or phase of the driving power.

The above description is merely a description of the technical spirit of the present disclosure, and those skilled in the art may change and modify the present disclosure in various ways without departing from the essential characteristic of the present disclosure. Accordingly, the embodiments described in the present disclosure should not be construed as limiting the technical spirit of the present disclosure, but should be construed as describing the technical spirit of the present disclosure. The range of the technical spirit of the present disclosure is not restricted by the embodiments. The range of protection of the present disclosure should be construed based on the following claims, and all of technical spirits within an equivalent range of the present disclosure should be construed as being included in the scope of rights of the present disclosure.

## Claims

1. An ultrasonic-based material processing apparatus comprising:
an ultrasonic transfer unit configured to accommodate a processing target material;
an ultrasonic generation unit disposed on a lateral surface of the ultrasonic transfer unit and comprising a piezoelectric element configured to generate ultrasonic waves;
a power supply unit configured to output driving power to the ultrasonic generation unit; and
a controller, wherein the controller
controls the power supply unit so that test power is supplied from the power supply unit to the ultrasonic generation unit,
determines a resonant frequency of the piezoelectric element based on an output of the piezoelectric element as a response to the test power,
determines a first driving frequency and a second driving frequency based on the resonant frequency, and
controls the power supply unit so that first driving power having the first driving frequency and second driving power having the second driving frequency are applied from the power supply unit to the ultrasonic generation unit.

2. The ultrasonic-based material processing apparatus of claim 1, wherein the controller determines the first driving frequency and the second driving frequency, based on the resonant frequency and information of the processing target material.

3. The ultrasonic-based material processing apparatus of claim 2, wherein the controller determines the first driving frequency and the second driving frequency, based on the resonant frequency and offset information that is determined based on the processing target material.

4. The ultrasonic-based material processing apparatus of claim 3, wherein the controller
determines the first driving frequency by adding a first value that is determined based on the offset information to the resonant frequency, and
determines the second driving frequency by subtracting a second value that is determined based on the offset information from the resonant frequency.

5. The ultrasonic-based material processing apparatus of claim 1, wherein the power supply unit generates synthetic driving power by synthesizing the first driving power and the second driving power and outputs the generated synthetic driving power to the ultrasonic generation unit.

6. The ultrasonic-based material processing apparatus of claim 3, wherein the controller
determines a driving frequency band having a predetermined range comprising the resonant frequency based on the offset information, and
determines the first driving frequency and the second driving frequency, among frequencies belonging to the driving frequency band.

7. The ultrasonic-based material processing apparatus of claim 1, wherein:
the first driving frequency is frequency higher than the resonant frequency, and
the second driving frequency is a frequency lower than the resonant frequency.

8. The ultrasonic-based material processing apparatus of claim 1, further comprising an input unit configured to receive information of the processing target material, wherein the controller sets offset information based on the information of the processing target material, which is input through the input unit.

9. The ultrasonic-based material processing apparatus of claim 1, wherein the controller
determines a resonant phase that is a phase in the resonant frequency of the piezoelectric element,
determines a driving phase based on the resonant phase, and
controls the power supply unit so that the driving power corresponding to the resonant frequency and the driving phase is supplied from the power supply unit to the ultrasonic generation unit.

10. The ultrasonic-based material processing apparatus of claim 8, wherein the driving phase is a phase delayed with respect to the resonant phase.

11. The ultrasonic-based material processing apparatus of claim 8, wherein the controller determines the driving phase, based on the resonant frequency and offset information that is determined depending on the processing target material.

12. A control method performed by an ultrasonic-based material processing apparatus, the control method comprising:
controlling a power supply unit so that test power is supplied from the power supply unit to an ultrasonic generation unit disposed on a lateral surface of an ultrasonic transfer unit;
determining a resonant frequency of the ultrasonic generation unit based on an output of a piezoelectric element as a response to the test power;
determining a first driving frequency and a second driving frequency based on the resonant frequency; and
controlling the power supply unit so that first driving power having the first driving frequency and second driving power having the second driving frequency are applied from the power supply unit to the ultrasonic generation unit.

13. The control method of claim 12, the control method further comprising:
determining the first driving frequency and the second driving frequency, based on the resonant frequency and information of the processing target material.

14. The control method of claim 13, the control method further comprising:
determining the first driving frequency and the second driving frequency, based on the resonant frequency and offset information that is determined based on the processing target material.

15. The control method of claim 12, the control method further comprising:
generating synthetic driving power by synthesizing the first driving power and the second driving power and outputs the generated synthetic driving power to the ultrasonic generation unit.
